# EUROPEAN PATENT SPECIFICATION

(11) **EP 1 000 908 B1**
(45) Date of publication and mention of the grant of the patent: **28.12.2005**
(21) Application number: 99119431.7
(22) Date of filing: 30.09.1999
(51) Int. Cl.: C03B 37/012

(54) **Method for producing quartz glass preform for optical fibers and the quartz glass tube used thereto**
Verfahren zum Herstellen einer Vorform aus Quarzglas für optische Fasern und das dafür verwendete Quarzglasrohr
Procédé de fabrication d'une préforme en verre de silice pour fibres optiques et le tube en verre de quartz utilisé

(30) Priority: 08.10.1998 JP 28706098; 08.10.1998 JP 28707498; 09.10.1998 JP 30332898
(43) Date of publication of application: 17.05.2000
(73) Proprietor: Heraeus Tenevo GmbH, 63450 Hanau (DE); SHIN-ETSU QUARTZ PRODUCTS COMPANY LTD., Shinjuku-ku, Tokyo (JP)
(72) Inventor: Shimada, Atsushi, Koriyama-shi, Fukushima 963-0111 (JP); Kato, Toshiyuki, Koriyama-shi, Fukushima 963-0702 (JP); Suzuki, Masanori, Koriyama-shi, Fukushima 963-8041 (JP); Watabe, Yutaka, Koriyama-shi, Fukushima 963-0104 (JP)
(74) Representative: Staudt, Armin Walter

(56) References cited:
- EP-A- 0 598 349
- EP-A- 0 972 752
- GB-A- 2 109 367
- GB-A- 2 208 114
- US-A- 4 388 094
- PATENT ABSTRACTS OF JAPAN vol. 12, no. 410, 28 October 1988 (1988-10-28) & JP 63 147840 A (FUJIKURA LTD), 20 June 1988 (1988-06-20)

## Description

### Field of Application

The present invention relates to a method for producing a quartz glass preform for optical fibers. Specifically, it relates to a method for producing a large quartz glass preform for optical fibers by heating and melt welding a large quartz glass tube integrally with a large core glass rod. The method provides excellent welding properties between the preform quartz glass tube and core glass rod, which has high surface precision. The preform obtained is free from bubbles at the welded interface relative to the core glass rod preform.

### Background of the Invention

In recent years, a great amount of optical fibers have been utilized for single mode, and it is expected that a greater amount of optical fibers will be required as the application ranges of the optical fibers extend from a long distance main lines to subscriber lines. For the extension of such an application range, mass production and cost reduction of optical fibers are indispensable. A most convenient method for accomplishing these goals is preparation of large size and long preforms for optical fibers and wire-drawing of them. However, since all of the core portions and clad portions are prepared by the axial depositions method (VAD method) or external deposition method (OVD method) put to practical use so far, a drawback exists in that the productivity of the preform or optical fiber may possibly be reduced when the size is increased further. In addition, when the porous material before vitrification of the preform (soot body formed by deposition of fine silica glass particles, hereinafter referred to as "porous soot body") itself is intended to be formed in a large scale, a problem results because cracks are formed or problems such as dropping of the porous soot body may sometimes occur, thereby bringing about the possibility of remarkably lowering the productivity. As a method for producing an optical fiber for overcoming the problems, Japanese Patent Laid-Open No. 109141/1995 (= EP-A-0 598 349) proposes a method for producing optical fibers which comprises preparing a clad portion for 80% or more of a cross sectional area by a high performance method capable of cost reduction, and integrating a quartz glass tube with a core glass rod prepared by the VAD method or the OVD method.

In the production method described in the publication mentioned above, the inner diameter portion of the quartz glass tube is apertured by a mechanical aperturing fabrication and then subjected to super precision grinding by a honing machine, while the outer peripheral surface is formed by a cylindrical grinding. This results in problems with the quartz glass tube obtained having an elliptic shape with a major diameter, and a minor diameter, or having a plurality of minute unevenness or minute cracks on the inner and the outer peripheral surfaces. Therefore, when it is welded integrally as the quartz glass tube for cladding or over cladding with the core glass rod, if the welding temperature is adjusted to that for the minor diametrical portion, the welding with the core rod becomes insufficient on the side of the major diameter, thereby forming a non-welded portion or forming bubbles, whereas the core glass rod and the inner peripheral portion are sufficiently welded, but heat is excessively applied to the outer periphery to worsen the accuracy if the temperature is adjusted to that for the longer diametrical portion. Accordingly, there have been problems such as disconnection of optical fibers during wire drawing, or trouble for the connection of the optical fibers after drawing.

However, since the production method described in the publication described above is a production method capable of easily enlarging the size and increasing the length, and suitable to mass production and cost reduction, a study to improve the production method has been conducted; and, as a result, the present invention has been accomplished based on the finding that the foregoing problems can be overcome by attaining high accuracy for the variation of the inner and outer diameter in the longitudinal direction of the quartz glass tube for the preform or for the fluctuation of the circularity so as to be below predetermined values thereby capable of overcoming the foregoing.

However, in the production method described in the publication mentioned above there are other drawbacks: Since the inner peripheral surface of the quartz glass tube is formed by mechanical grinding and polishing, while the outer peripheral surface ie merely mechanically ground, the fabricated state at the peripheral surface is rough to cause unevenness or crack in which coolant, grinding powder and abrasive powder intrude during grinding. The obstacles can not be removed sufficiently by hydrofluoric acid cleaning after fabrication to cause bubbles upon welding integration with the core glass rod and the presence of remained bubbles brings about a drawback of causing troubles in connection of optical fibers after wire drawing. Although an intensive etching treatment may be considered to completely remove the unevenness or crack, indents or flaws of the quartz glass tube are selectively etched in the etching treatment, which further roughen the inner and the outer surfaces of the quartz glass tube and can not dissolve the foregoing drawback. However, since the size of the preform for optical fibers can be enlarged easily by the production method for optical fibers as described in Japanese Patent Laid-Open No. 109141/1995 and which is a production method suitable to mass production and cost reduction, the present inventors have made an earnest study for improving the production method and have accomplished present invention based on the finding that the foregoing drawback can be overcome by grinding the inner and the outer peripheral surfaces of a quartz glass ingot accurately with diamond abrasive particles and then polishing the inner peripheral surface with cerium oxide abrasive particles to improve the surface accuracy.

However, studies on futher improvement of the known method have been conducted and, as a result, it has been found that occurrence of a non-welded portion or the presence of bubbles at the interface in the optical fiber preform are also caused by the OH group concentration, chlorine concentration, hydrogen discharge quantity and water vapor discharge quantity in the quartz glass tube.

### Summary of the Invention

It is an object of the present invention to provide a method for producing a preform for optical fibers free from the presence of bubbles at the welded interface between the quartz glass tube and the core glass rod used as the preform for optical fibers. It is a further object of the present invention to provide a large preform for optical fibers, which is suitable to mass production and reduction of cost.

These objects and others that will become apparent from the following specification are achieved by the method and the quartz glass tube defined in claims 1 and 9. A method is provided for producing a quartz glass preform for optical fibers comprising inserting a core glass rod for use as a preform of optical fibers into a quartz glass tube for a preform of optical fibers and then heating and melt welding it to obtain a monolithic body, wherein said quartz glass tube for preforms has in its longitudinal direction, a mean difference in outer diameter of up to 1.0 mm , a mean difference in inner diameter of up to 0.5 mm, an outer diameter circularity of up to 0.5 mm, an inner diameter circularity of up to 0.5 mm, and a deviation of circle center for the mean outer diameter of up to 1 mm with a deviation of the circle center for the mean inner diameter with respect to the circle center for the mean outer diameter of up to 1 mm, said quartz glass tube for preforms being a quartz glass tube obtained by mechanically grinding the inner and outer peripheral surface of a high purity quartz glass ingot using diamond abrasive particles and then mechanically polishing the inner peripheral surface thereof with cerium oxide abrasive particles, said quartz glass tube for the preform has an OH group concentration of up to 1 ppm, a chlorine content of up to 3000 ppm, a gaseous hydrogen discharge quantity of up to 1.0 × 10¹⁸ molecule/cm³, and a water vapor discharge quantity of up to 2.0 × 10¹⁷ molecule/cm³.

As described above, the production method according to the present invention is a method of producing a quartz glass preform for optical fibers by a so-called rod-in-tube method of inserting a core glass rod for optical fiber preform in a quartz glass tube for an optical fiber preform and then welding them integrally, wherein the quartz glass tube used for preform has, in the longitudinal direction thereof, a mean difference in inner diameter of up 0.5 mm, an outer diameter circularity of up to 0.5 mm, an inner diameter circularity of up to 0.5 mm, and a deviation of the circle center for the mean outer diameter of up to 1 mm, a deviation of the circle center for the mean inner diameter with respect to the circle center for the mean outer diameter of up to 1 mm. If the numerical values in the quartz glass tube are out of the range as described above, disadvantages result because the inner and the outer peripheries of the core glass rod and the quartz glass tube are not heated uniformly, the core glass rod is brought into contact with the quartz glass tube upon insertion to damage the inner peripheral surface thereof, which causes deviation of the circle center or the presence of bubbles. Further, clearance between the core glass rod and the quartz glass tube can not be decreased making it difficult for the production of the quartz glass preform at high accuracy for use in optical fibers.

The mean difference in the outer diameter described above is a value obtained by measuring the outer diameter of the quartz glass tube of a predetermined length for 4 points to 360 points at every 50 to 100 mm interval by a laser type outer diameter measuring instrument and determining the outer diameter on the periphery and averaging them. The mean difference inner diameter is a value obtained by measuring the wall thickness of a tube at 4 points to 360 points at every 50 to 100 mm interval by a laser type thickness measuring instrument in the same manner as described above, determining the inner diameter on the periphery by calculation with respect to the outer diameter and averaging them. The circularity is a value obtained by measuring the outer diameter and the wall thickness of a quartz glass tube of a predetermined length at 4 points to 360 points at every 50 to 100 mm interval by a laser type outer diameter measuring instrument and a thickness measuring instrument, calculating the inner diameter using them, determining the maximum value, the minimum value and the mean value for the outer diameter and the inner diameter on the circumference, and determining the maximum value for [maximum diameter (inner diameter) - mean outer diameter (inner diameter)] or [mean outer diameter (inner diameter) - minimum diameter (inner diameter)] as the circularity for the circumference. Further, the deviation of the circle center is a deviation, based on the center of a plane for the mean outer diameter and the mean inner diameter on the end face of a quartz glass tube, relative to an axis extending from the center of the circle for the outer diameter plane and the inner diameter plane perpendicular to the longitudinal direction of the tube.

The quartz glass tube for optical fibers at high accuracy is produced by at first grinding the outer peripheral surface of a columnar or cylindrical quartz glass ingot by a cylindrical grinding device having diamond abrasive particles, then polishing by a polishing device to define an outer diameter, determining the circle center for the outer diameter, opening an aperture corresponding to the circle center by a core drilling device having diamond abrasive particles and then polishing by a polishing device having cerium oxide abrasive particles. Since the outer peripheral surface is thus formed with a high accuracy, accurate size can be measured even if small unevenness is present on the outer surface when measuring the outer diameter by a laser measuring instrument, and an inner peripheral surface at high accuracy can be ground. A method of enforcing a carbon drill under heating may be used for the formation of the inner peripheral surface of the quartz glass tube. This method is particularly suitable to grinding of the inner peripheral surface of a large size quartz glass tube and the inner peripheral surface is formed as a mirror face by a grinding, so that polishing can be saved.

The method of manufacturing a columnar or cylindrical quartz glass ingot for forming a quartz glass tube used in a present invention can include, for example, a method of flame hydrolyzing a siloxane compound such as silicon tetrachloride or organic silicon compound in an oxyhydrogen flame, depositing the resultant fine silica particles and dehydrating and vitrifying them, or a Verneuil method of applying an oxyhydrogen flame treatment to a crystal powder formed by pulverizing naturally occurring crystals and then purifying them by chemical treatment, a large and elongate ingot being preferred. By use of the large size and elongated ingot, optical fibers suitable to mass production and cost reduction can be obtained.

On the other hand, the core glass rod for optical fibers is a light transmission portion and includes a quartz glass rod or a quartz glass rod having an optical clad portion formed on the periphery thereof. That is, "core glass rod" in the present invention includes a core rod and a core rod with clad. A core rod with no clad portion can be formed, for example, by a known VAT method or OVD method, while means for preparing the core rod with clad can include a method of jacketing a quartz glass tube over a core rod or a method of forming a clad portion to the periphery of the core rod by the OVD method or the like.

The quartz glass preform for optical fibers using the core glass rod for optical fiber preform and the quartz glass tube for optical fiber preform is produced by inserting a core glass rod for a preform into a quartz glass tube for a preform carefully so that it is not in contact with the inner peripheral surface of the tube, fixing them while aligning each of the circle centers for the glass core rod and the quartz glass tube, preferably connecting both ends to dummy quartz materials, amending bending and torsion caused by connection while rotating the entire portion, placing them from the lower end into a vertical electric furnace from above and melt welding them integrally by heating zonewise successively at a temperature of about 1900°C to about 2800°C. The successive zonewise heating is also referred to as a zone melting in which heating area moves gradually.

As described above, the production method according to the present invention comprises mechanically grinding the inner and the outer peripheral surfaces of a quartz glass ingot at high purity with diamond abrasive particles at a high grinding speed, with less roughening for the ground surface and with less degradation of abrasive stone and then mechanically polishing the inner peripheral surface with cerium oxide abrasive particles to enhance the surface accuracy. The surface accuracy of the quartz glass tube includes a maximum roughness Rmax of up to 1 µm and a center line average roughness Ra of up to 0.1 µm for an inner peripheral surface and an outer peripheral surface having a maximum roughness Rmax of up to 10 µm and a center line average roughness Ra of up to 1 µm. If the maximum roughness and the center line average roughness of the surface exceed the ranges described above, bubbles may sometimes be formed on the welded interface of the preform for optical fibers, which is not preferred. The mechanical grinding with the diamond abrasive particles is preferably conducted by using diamond abrasive particles of different particle sizes, and at first conducting coarse grinding by diamond abrasive particles of a coarse particle size and then conducting finish grinding by diamond abrasive particles of a fine particle size. While fine cracks are formed on the inner and the outer peripheral surfaces of the quartz glass tube by grinding with the diamond abrasive particles, cracks on the outer peripheral surface are smoothed by heat melting upon welding integration with the core glass rod. On the other hand, fine cracks are not melted sufficiently and left as they are on the inner peripheral surface since the heating temperature is relatively low, so that polishing with cerium oxide abrasive particles is necessary. Preferably, heat melting is conducted after the polishing to apply mirror finishing so that the inner and the outer peripheral surfaces of the quartz glass tube have a maximum roughness Rmax of up to 0.5 µm and a center line average roughness Ra of up to 0.1 µm. For the heat melting, flame melting using oxyhydrogen or propane, or external heat melting using an electric furnace can be used. When the quartz glass tube mirror finished by the heat melting is used for the clad (over clad) of the core glass rod, a favorable quartz glass preform for optical fibers free from bubbles at the welded interface can be produced. Also in a case of integrally welding one or plurality of other quartz glass tubes after the welding integration of the quartz glass tube and the core glass rod, favorable quartz glass preforms for optical fibers can also be produced.

The quartz glass tube for optical fiber preform is produced by flame hydrolyzing a siloxane compound such as silicon tetrachloride or an organic silicon compound in oxyhydrogen flame to form a porous soot body, dehydrating and then vitrifying the same, and mechanically grinding the quartz glass ingot obtained and, if necessary, further applying mechanical polishing. Then, control is applied so that the OH group concentration is up to about 1 ppm, the chlorine content is up to 3000 ppm, the gaseous hydrogen discharge quantity is up to 1.0 × 10¹⁸ molecules/cm³ and the water vapor discharge quantity is up to 2.0 × 10¹⁷ molecules/cm³ respectively in the quartz glass tube. The OH group concentration, the chlorine content the gaseous hydrogen discharge quantity and the water vapor discharge quantity are controlled by controlling the amount of oxygen and hydrogen as a combustion gas to be supplied and the amount of the starting material gas to be supplied. If the OH group concentration, the chlorine content, the gaseous hydrogen discharge quantity and water vapor discharge quantity exceed the ranges described above, bubbles are present at the welding interface between the quartz glass tube and the core glass rod for the optical fiber preform to give undesired effects on the wire drawing itself or the optical fiber after wire drawing. When the quartz glass tube obtained for optical fiber preform is further subjected to heating and degassing treatment at 800 - 2500°C in atmospheric air, in an inert gas or in vacuum atmosphere, the gaseous hydrogen discharge quantity and the vapor water discharge quantity are further reduced and the gaseous hydrogen discharge quantity is reduced to up to 5.0 × 10¹⁷ molecules/cm³ and the water vapor discharge quantity is reduced to up to 1.0 × 10¹⁷ molecules/cm³ when heating in the atmospheric air or an inert gas, and the gaseous hydrogen discharge quantity is reduced to up to 2.0 × 10¹⁶ molecules/cm³ and the water vapor discharge quantity is reduced to up to 5.0 × 10¹⁶ molecules/cm³ when heating in the vacuum atmosphere. Particularly, the heating and degassing treatment at 800 - 2500°C in the vacuum atmosphere is preferred. The vacuum degree in the vacuum atmosphere is up to about 10 Pa or lower and, preferably, up to about 0.5 Pa or lower. Since the gaseous hydrogen discharge quantity and the water vapor discharge quantity can be reduced by the heating and degassing treatment, when the OH group concentration, the chlorine concentration, the gaseous hydrogen discharge quantity and the water vapor discharge quantity exceed the range defined in the present invention in the production of the quartz glass tube for the preform, the heating and degassing treatment is preferably applied to bring the OH group concentration, the chlorine concentration, the hydrogen discharge quantity and the water vapor discharge quantity into the ranges described above.

In the production of the quartz glass tube according to the present invention, an outer circumferential grinding device or a core drilling device can be used for the mechanical grinding, and a precision honing device can be used for the mechanical polishing device.

The OH group concentration in the quartz glass tube is measured by a measuring method described in D. M. Dodd and D. B. Fraser Optical determination of OH in fused silica, Journal of Applied Physics, Vol. 37(1966), and the chlorine content is measured by a silver nitrate turbidimetry, the gaseous hydrogen and water vapor discharging amounts are formed as gas discharge quantity in vacuum at 1000°C, and measured by a measuring method as described in Y. Morimoto, et al., Analysis of gas release from vitreous silica, Journal of Non-Crystalline Solids, Vol. 139(1992). In the measuring method, the detection limit for the gaseous hydrogen discharge quantity is 2.0 × 10¹⁶ molecules/cm³ and that for the water vapor discharge quantity is 5.0 × 10¹⁶ molecules/cm³. In the production of the quartz glass tube for optical fiber preforms, the gaseous hydrogen discharge quantity and the water vapor discharge quantity can be reduced to the detection limits by applying a heating and degassing treatment in a vacuum atmosphere at 800 - 2500°C.

### Description of the preferred Embodiments

The following examples are purely illustrative and do not show the claimed subject-matter as defined in claims 1-8 and 9.

The maximum roughness Rmax and the center line average roughness Ra are in accordance with the definitions in Japanese Industrial Standard (JIS) B0601 (published before 8. oct. 1998) and measured by a contact type measuring method of measuring at every 10 mm length by a convenient roughness gage (manufactured by Tokyo Seimitsu Co., Surfcom 300B) and determining the maximum roughness Rmax and the center line average roughness Ra in this measurement.

### Example 1

Using a VAD method, a porous soot body was prepared by vaporizing silicon tetrachloride, flame hydrolyzing it in an oxyhydrogen flame and depositing fine silica glass particles on a rotating quartz glass bar. The porous soot body was charged in an electric furnace and, while considering conditions such as refractive index of the core glass rod, it was dehydrated under heating at 1100°C by a gas mixture of He and Cl₂, and successively vitrified in a He atmosphere at 1600°C to obtain a columnar quartz glass ingot. The columnar quartz glass ingot was cut at both ends, accurately ground at the outer periphery to a predetermined size by a cylindrical grinding device having diamond abrasive particles and polished by a cerium oxide polishing device and then the size was measured by a laser outer diameter measuring instrument to determine the circle center for the outer diameter. An aperture was formed by a core drilling device having diamond abrasive particles which was aligned with the circular center, polished by a precision honing device having cerium oxide abrasive particles and then etched by hydrofluoric acid, washed with purified water and then dried to prepare a quartz glass tube. When the size of the quartz glass tube obtained was measured at 50 mm intervals by a laser outer diameter measuring instrument and a wall thickness measuring instrument, the tube had, in a longitudinal direction, a length of 1000 mm, an outer diameter of 60 mm, a mean difference in the outer diameter of 0.4 mm, a circularity of 0.08 mm at the maximum, an inner diameter of 20 mm, a mean difference in the inner diameter of 0.02 mm, a circularity of 0.05 mm at the maximum and a deviation of the circle center for the mean outer diameter of 0.1 mm at the maximum and a deviation of the circle center for the mean inner diameter with respect to the circle center for the mean outer diameter of 0.1 mm at the maximum.

A core rod for optical fiber preform with cladding having a difference of refractive index between core and cladding (Δn) of 0.343% was prepared by a VAD method, and stretched under heating in a vertical electric furnace at 2000°C while adjusting the outer diameter to 19 mm relative to the inner diameter of the quartz glass tube for the optical fiber preform. The core glass rod was carefully inserted into the quartz glass tube so that it is not in contact with the inner peripheral surface of the tube. The core glass rod and the quartz glass tube were secured with their circle centers being aligned with each other, connecting both ends to quartz glass dummy tubes, putting the lower end portion of them into a vertical electric furnace at 2000°C from above, to weld the lower end portion. Then, heating was conducted successively zonewise while reducing the pressure in the quartz glass tube by a vacuum pump to produce a preform for optical fibers. When the outer periphery of the obtained preform was measured at 50 mm intervals by a laser outer diameter measuring instrument, the error was less than ± 0.2 mm with respect to the predetermined outer diameter. Further, when the quartz glass preform for optical fibers was measured by a preform analyzer, no deviation of circle center was observed.

### Example 2

A columnar natural quartz glass ingot was prepared using quartz powder formed by pulverizing and arranging grain size of naturally occurring quartz and chemically purifying it by a Verneuil method using an oxyhydrogen flame. When the columnar quartz glass ingot obtained was prepared into a quartz glass tube for optical fiber preform in the same manner as in Example 1, it had, in a longitudinal direction, a length of 2000 mm, an outer diameter of 120 mm, a mean difference in the outer diameter of 0.3 mm, a circulatory of 0.15 mm at the maximum, an inner diameter of 60 mm, a mean difference in the inner diameter of 0.02 mm, a circularity of 0.03 mm at the maximum, a deviation of circle center for the mean outer diameter of 0.1 mm at the maximum and a deviation of the circle center for the mean inner diameter with respect to the circle center for the means outer diameter of 0.2 mm at the maximum.

A core glass rod prepared in the same manner as in Example 1 with an outer diameter of 59 mm was aligned with inner diameter of the quartz glass tube and was inserted into the quartz glass tube so as not to be in contact with the inner peripheral surface of the tube, to produce a quartz glass preform for optical fibers like than in Example 1. When the outer periphery of the preform obtained was measured at 50 mm intervals by a laser outer diameter measuring instrument, the error was within ± 0.2 mm relative to the predetermined outer diameter. Further, when the quartz glass preform for optical fibers was measured by a preform analyzer, no deviation of circle center was observed.

### Example 3

A porous soot body was prepared by a OVD method, placed in an electric furnace, heated and dehydrated at 1100°C in a gas mixture of N₂ and Cl₂ in a furnace while considering conditions such as refractive index of the core glass rod and was successively heated in a vacuum atmosphere at 1600°C to prepare a cylindrical quartz glass ingot. From the cylindrical quartz glass ingot obtained, a quartz glass tube was prepared in the same manner as in Example 1. The quartz glass tube obtained had a length of 3500 mm, an outer diameter of 200 mm, a mean difference in the outer diameter in the longitudinal direction of 0.8 mm, a circularity of 0.09 mm at the maximum, an inner diameter of 40 mm, a mean difference in the inner diameter in the longitudinal direction of 0.1 mm, a circularity of 0.12 mm at the maximum, a deviation of circle center for the mean outer diameter of 0.6 mm at the maximum and a deviation of the circle center for the mean inner diameter with respect to the circle center for the means outer diameter of 0.7 mm at the maximum.

In the same method as in Example 1, a core glass rod was prepared by conducting stretching while adjusting the outer diameter to 39 mm relative to the inner diameter of the quartz glass tube in a vertical electrical furnace at 2000°C. The core glass rod was inserted into the quartz glass tube so as not to be in contact with the inner peripheral surface of the tube, to produce a quartz glass preform for optical fibers in the same manner as in Example 1. When the outer periphery of the obtained preform was measured on 50 mm interval by a laser outer diameter measuring instrument, the error was within ± 0.2 mm relative to the predetermined outer diameter. Further, when the quartz glass preform for optical fibers was measured by a preform analyzer, no deviation of circle center was observed.

### Example 4

After preparing a quartz glass tube in the same CVD method as that for the production conducted in Example 3, the quartz glass tube was placed in a vertical electric furnace heated to 2000°C, and an inert gas was caused to flow to the inside and the outside thereof. The quartz glass tube obtained was subjected to etching by hydrofluoric acid, washing with purified water and drying. When the surface roughness Rmax for the inner peripheral surface of the tube was measured, it was 0.3 µm, and the surface roughness Rmax for the outer peripheral surface was also 0.35 µm. When the size of the quartz glass tube obtained was measured at 50 mm intervals by a laser outer diameter measuring instrument and a wall thickness measuring instrument, it had a length of 3500 mm, an outer diameter of 200 mm, a mean difference in the outer diameter in the longitudinal direction of 0.5 mm, a circularity of 0.05 mm at the maximum, an inner diameter of 40 mm, a mean difference in the inner diameter in the longitudinal direction of 0.1 mm, a circularity of 0.07 mm at the maximum, a deviation of circle center for the mean outer diameter of 0.3 mm at the maximum and a deviation of the circle center for the mean inner diameter with respect to the circle center for the means outer diameter of 0.4 mm at the maximum.

A core glass rod prepared in the same manner as in Example 1 with an outer diameter adjusted to 39 mm for the inner diameter of the quartz glass tube was inserted into the quartz glass tube so as not to be in contact with the inner peripheral surface of the tube, to produce a quartz glass preform for optical fibers like that in Example 1. When the outer periphery of the preform obtained was measured at 50 mm intervals by a laser outer diameter measuring instrument, the error was within ± 0.2 mm relative to the predetermined outer diameter. When the quartz glass preform for optical fibers was measured by a preform analyzer, no deviation of circle center was observed.

### Example 5

A porous soot body was prepared by using an OVD method vaporizing silicon tetrachloride, flame hydrolyzing it in an oxyhydrogen flame and depositing fine silica glass particles on the periphery of a rotating substrate. The porous soot body was charged in an electric furnace and heated and dehydrated at 1100°C by a gas mixture of He and Cl₂ while considering conditions such as refractive index of the core glass rod, and successively vitrified in a He atmosphere at 1600°C to produce a cylindrical quartz glass ingot. The cylindrical quartz glass ingot was cut at both ends and ground to an outer diameter of an approximate predetermined size by #100 diamond abrasive particles and then the size was measured by a laser outer diameter measuring instrument to determine the circle center for the outer diameter. Then, it was ground to an approximate predetermined size by #150 diamond abrasive particles of a core drilling device being aligned with the circle center for the outer diameter and then polished with #1000 and #3000 cerium oxide abrasive particles. The quartz glass tube obtained was etched by hydrofluoric acid, washed with purified water and then dried. When the size of the prepared quartz glass tube was measured by a laser outer diameter measuring instrument and a wall thickness measuring instrument, it had a length of 3500 mm, an outer diameter of 200 mm and an inner diameter of 40 mm. Referring to the surface roughness for the inner and the outer peripheral surfaces, the maximum roughness Rmax on the inner peripheral surface was 0.7 µm and the center line average roughness Ra on the inner peripheral surface was 0.06 µm and the maximum roughness Rmax on the outer peripheral surface was 5.5 µm and the center line average roughness Ra on the outer peripheral surface was 0.5 µm.

A core rod with cladding was prepared by a VAD method, and stretched under heating by a precision autostretcher having outer diameter control while the outer diameter was adjusted to 39 mm relative to the inner diameter of the quartz glass tube. The core glass rod was carefully inserted into the quartz glass tube so that it was not in contact with the inner peripheral surface of the tube. The core glass rod and the quartz glass tube were secured with the circle center being aligned to each other, both ends were connected to quartz glass dummy tubes, inserted from the lower end portion into a vertical electric furnace at 2000°C from above, the lower end portion was welded and then heated zonewise successively while reducing the pressure in the quartz glass tube by a vacuum pump to produce a preform for optical fibers. The preform obtained was cut at every 1000 mm and, when white light was applied to one of them from the end in a dark room, the number of bubbles with the minimum unit of 0.1 mm or more that could be visually recognized was 9 per 1000 mm. Further, when the size of the outer diameter was measured at 50 mm intervals by a laser outer diameter measuring instrument, the dimensional error was within ± 0.2 mm. When the quartz glass preform for optical fibers was measured by a preform analyzer, no deviation for the circle center was observed.

### Example 6

A large porous soot body was prepared using a VAD method by vaporizing silicon tetrachloride, flame hydrolyzing it in oxyhydrogen flame and depositing fine silica glass particles on a rotating quartz glass bar. The porous soot body was charged in an electric furnace and heated and dehydrated at 1100°C by a gas mixture of He and Cl₂, while considering conditions such as refractive index of a core glass rod, and successively vitrified in a He atmosphere at 1600°C to produce a columnar quartz glass ingot. The columnar quartz glass ingot was cut at both ends and ground for the outer diameter to an approximate predetermined size by #100 diamond abrasive particles and then by #300 diamond abrasive particles of a cylindrical grinding device. Then, the size was measured by a laser outer diameter measuring instrument to determine the circle center for the outer diameter. An aperture was formed by a core drilling device while being aligned with the circle center for the outer diameter and then polished with #1000 and #3000 cerium oxide abrasive particles using a precious honing fabrication device. The polished quartz glass tube was heated to 2000°C in an electric furnace while flowing an inert gas to conduct melting mirror finish for the surface and then etched by hydrofluoric acid, washed by purified water and dried to prepare a quartz glass tube of high accuracy. When the size of the quartz glass tube was measured by a laser outer diameter measuring instrument and a wall thickness measuring instrument, it had a length of 1000 mm, an outer diameter of 60 mm and an inner diameter of 20 mm. Further, when the surface roughness for the inner and the outer peripheral surfaces was examined, the maximum roughness Rmax was 0.2 µm and the center line average roughness Ra was 0.03 µm on the inner peripheral surfaces, and the maximum roughness Rmax was 0.3 µm and the center line average roughness Ra was 0.05 µm on the outer peripheral surface.

A core rod with cladding was prepared by a VAD method, and stretched under heating by a precision autostretcher having outer diameter control while the outer diameter was adjusted to 19 mm relative to the inner diameter of the quartz glass tube. The core glass rod was carefully inserted into the quartz glass tube so that it was not in contact with the inner peripheral surface of the tube. The core glass rod and the quartz glass tube were secured with the circle center being aligned to each other, both ends were connected to quartz glass dummy tubes, inserted from the lower end portion into a vertical electric furnace at 2000°C from above, the lower end portion was welded and then heated zonewise successively while reducing the pressure in the quartz glass tube by a vacuum pump to produce a preform for optical fibers. The preform obtained was cut on every 1000 mm and, when white light was applied to one of them from the end in a dark room, the number of bubbles with the minimum unit of 0.1 mm or more that could be visually recognized was 4 per 1000 mm. When the size of the outer diameter was measured at 50 mm intervals by a laser outer diameter measuring instrument, the dimensional error was within ± 0.2 mm. Further, when the quartz glass preform for optical fibers was measured by a preform analyzer, no deviation for the circle center was observed.

### Example 7

A porous soot body was prepared by using a VAD method vaporizing silicon tetrachloride, flame hydrolyzing the same in oxyhydrogen flame and depositing fine silica glass particles on a rotating quartz glass bar. To the flame hydrolyzing burner, were supplied carbon tetrachloride at 1500 g/h, a gaseous hydrogen at 3.0 m³/h and oxygen gas at 2.3 m³/h. The porous soot body obtained had an outer diameter of about 250 mm and length of about 2000 mm. The porous soot body was placed in an electric furnace, subjected to heating and dehydrating treatment at 1100°C in a mixed gas atmosphere of a nitrogen gas at 0.5 m³/h and a chlorine gas at 0.05 m³/h while considering conditions such as refractive index of the core glass rod, and successively vitrified in a vacuum atmosphere at 1 Pa or lower and at 1600°C to produce a cylindrical quartz glass ingot. The cylindrical quartz glass ingot obtained had an outer diameter of about 120 mm and a length of about 1500 mm. The ingot was cut at both ends and ground to an outer diameter of 90 mm by a cylindrical grinding device. The circle center for the outer diameter was determined, an aperture was formed by a core drilling device while being aligned with the circle center and polished to a size of 25 mm by a precision honing device. The quartz glass tube obtained had an outer diameter of 90 mm, and an inner diameter of 25 mm and was cut to a 1000 mm length.

When OH groups, chlorine and gas discharge quantity in vacuum at 1000°C were measured for the samples of the quartz glass tube, the residual OH group concentration was 0.1 ppm, the chlorine concentration was 1500 ppm, the gaseous hydrogen discharge quantity is 5.5 × 10¹⁷ molecules/cm³ and water vapor discharge quantity was 1.8 × 10¹⁷ molecules/cm³.

A core rod with cladding was prepared by a VAD method, and stretched under heating in a vertical electric furnace to an outer diameter of 20 mm and a length of 1000 mm. The core glass rod was carefully inserted into the quartz glass tube so that it was not in contact with the inner peripheral surface of the tube. The core glass rod and the quartz glass tube were secured with the circle center being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube by a vacuum pump to produce a preform for optical fibers. The preform obtained was cut at every 1000 mm and, when white light was applied to one of them from the end in a dark room, the number of bubbles with the minimum unit of 0.1 mm or more that could be visually recognized was 7 per 1000 mm.

### Example 8

A porous soot body was prepared by the same VAD method as in Example 7, which was dehydrated and then the quartz glass tube obtained was ground to an outer diameter of 100 mm by the same grinding and polishing method as in Example 7 and polished to 25 mm inner diameter. Then, the quartz glass tube was placed in a horizontal electric furnace heated to 2000°C for degassing and surface mirror finishing of quartz glass tube, and heat treatment was conducted while flowing an inert gas to the inside and the outside of the quartz glass tube. The quartz glass tube after treatment had an outer diameter of 90 mm and an inner diameter 25 mm and it was cut into 1000 mm length. When the OH groups and chloride, as well as gas discharge quantity at 1000°C in vacuum were measured for this sample, the residual OH group concentration was about 0.1 ppm, the chlorine concentration was 1500 ppm, the gaseous hydrogen discharge quantity was 2.5 × 10¹⁷ molecules/cm³ or lower and the water vapor discharge quantity was 8.0 × 10¹⁶ molecules/cm³ or lower.

A core rod with cladding was prepared by a VAD method, and stretched under heating in a vertical electric furnace to 20 mm outer diameter and 1000 mm length. The core glass rod was carefully inserted into the quartz glass tube so that it was not in contact with the inner peripheral surface of the tube. The core glass rod and the quartz glass tube were secured with their circle center being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube to produce a preform for optical fibers. The obtained preform was cut at every 1000 mm and, when white light was applied to the obtained quartz glass preform from the end in a dark room, the number of bubbles with the minimum unit of 0.1 mm or more that could be visually recognized was 4 per 1000 mm.

### Example 9

A porous soot body was prepared by the same VAD method as in Example 8, was then vitrified, and then ground and polished in the same manner as in Example 8 to prepare a synthetic quartz glass tube of 90 mm outer diameter, 25 mm diameter and 1000 mm length. For degassing and mirror finishing, the tube was inserted in a horizontal electric furnace heated to 1000°C and subjected to heating and degassing treatment in the vacuum atmosphere at 1 Pa or lower in the furnace. When the OH groups, chlorine and gas discharge quantity in vacuum at 1000°C were measured for the sample, the residual OH group concentration was about 0.1 ppm, the chlorine concentration was 1500 ppm, gaseous hydrogen discharge quantity was 2.0 × 10¹⁶ molecules/cm³ as the detection limit or lower and the water vapor discharge quantity was at 5.0 × 10¹⁶ molecules/cm³ as the detection limit or lower.

A core rod with cladding was prepared by a VAD method, and stretched under heating by a vertical electric furnace to 20 mm outer diameter and 1000 mm length. The core glass rod was carefully inserted into the quartz glass tube such that it was not in contact with the inner peripheral surface of the tube. The core glass rod and the quartz glass tube were secured with their circle centers being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube to produce a preform for optical fibers. When white light was applied to the obtained quartz glass preform from the end face in a dark room, no bubbles of a minimum size of 0.1 mm or more were visually observed.

### Example 10

A porous soot body was prepared using a OVD method by vaporizing silicon tetrachloride at high purity, flame hydrolyzing the same in oxyhydrogen flame and depositing them on a substrate of 50 mm outer diameter rotating at 50 rpm, to prepare a porous soot body. To the flame hydrolyzing burner, were supplied carbon tetrachloride at 1500 g/h, gaseous hydrogen at 1.8 m³/h and oxygen gas at 0.9 m³/h, respectively. The porous soot body obtained had an outer diameter of about 400 mm and a length of about 3500 mm. The porous soot body was placed in an electric furnace, subjected to heating and dehydrating treatment at 1000°C in a mixed gas atmosphere of a nitrogen gas at 0.5 m³/h and a chlorine gas at 0.05 m³/h while considering conditions such as refractive index of the core glass rod, vitrified in a vacuum atmosphere at 1600°C and then the substrate was withdrawn to produce a cylindrical quartz glass ingot. The cylindrical quartz glass ingot obtained had an outer diameter of about 200 mm, an inner diameter of about 50 mm and a length of about 3500 mm. The ingot was cut at both ends and the inner and the outer peripheries were mechanically ground and polished to prepare a synthetic quartz glass tube having an outer diameter of 195 mm, an inner diameter of 55 mm and a length of 3000 mm.

When a sample of the quartz glass tube was analysed, the residual OH group concentration was 0.1 ppm, the chlorine concentration was 2000 ppm, the gaseous hydrogen discharge quantity is 6.0 × 10¹⁷ molecules/cm³ and water vapor discharge quantity was 2.0 × 10¹⁷ molecules/cm³.

A core rod with cladding was prepared by a VAD method, and stretched under heating in a vertical electric furnace to 50 mm outer diameter and 3000 mm length. The core glass rod was carefully inserted into the quartz glass tube such that it was not in contact with the inner peripheral surface of the tube. The core glass rod and the quartz glass tube were secured with their circle centers being aligned to each other, both ends were connected to quartz glass dummy tubes, inserted from the lower end portion into a vertical electric furnace at 2300°C from above at 25 mm/min, the lower end portion was welded and then heated zonewise successively to be welded integrally while reducing the pressure in the quartz glass tube to produce a preform for optical fibers. The preform obtained was cut at every 1000 mm and, when white light was applied to one of them from the end in a dark room, the number of bubbles with a minimum size of 0.1 mm or more that could be visually recognized was 9 per 1000 mm, indicating that a large quartz glass preform for optical fibers with fewer bubbles could be obtained from a large diameter quartz glass tube.

### Comparative Example 1

A porous soot body was preparing in the same manner as in Example 7, heated at 1000°C in a furnace of an atmosphere containing a nitrogen gas at 0.5 m³/h, without conducting dehydration by a chlorine gas and then vitrified at 1600°C. The quartz glass ingot obtained had an outer diameter of about 120 mm and a length of about 1500 mm. The ingot was cut at both ends and the outer periphery was ground to 90 mm by a cylindrical grinding device, the circle center for the outer diameter was determined, an aperture was formed by a core drilling device being aligned with the circle center and polished to a size of 25 mm by a precision honing device. The quartz glass tube had an outer diameter of 90 mm and an inner diameter of 25 mm and it was cut into 1000 mm length.

When OH groups, chlorine and gas discharge quantity in vacuum at 1000°C were measured for the sample of the quartz glass tube, the residual OH group concentration was 300 ppm, the chlorine concentration was 10 ppm, the gaseous hydrogen discharge quantity was 1.2 × 10¹⁸ molecules/cm³ and water vapor discharge quantity was 2.3 × 10¹⁷ molecules/cm³.

A core rod with cladding was prepared by a VAD method, and stretched under heating by a precision autostretcher having outer diameter control to an outer diameter of 20 mm and a length of 1000 mm. The core glass rod was carefully inserted into the quartz glass tube such that it was not in contact with the inner peripheral surface of the tube. The core glass rod and the quartz glass tube were secured with their circle centers being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube to produce a preform for optical fiber. When white light was applied to the quartz glass preform from the end in a dark room, the number of bubbles with a minimum size of 0.1 mm or more that could be visually recognized was 19 per 1000 mm.

### Comparative Example 2

A transparent quartz glass tube was prepared by a so-called direct method of depositing and simultaneously vitrifying fine silica glass particles formed by flame hydrolyzing silicon tetrachloride at high purity to a glass bar rotating at 20 rpm. To the flame hydrolyzing burner, were supplied carbon tetrachloride at 2000 g/h, gaseous hydrogen at 20 m³/h and oxygen gas at 10 m³/h. The transparent glass ingot obtained had an outer diameter of about 120 mm and length of about 1300 mm. The ingot was cut at both ends and ground to an outer diameter of 90 mm by a cylindrical grinding device, the circle center for the outer diameter was determined, and an aperture was formed by a core drilling device while being aligned with the circle center and was polished to a size of 25 mm by a precision honing device. The quartz glass tube obtained had an outer diameter of 90 mm, and an inner diameter of 25 mm and was cut into 1000 mm length.

When OH groups, chlorine and gas discharge quantity in vacuum at 1000°C were measured for the sample of the quartz glass tube, the residual OH group concentration was 1000 ppm, the chlorine concentration was 100 ppm, the gaseous hydrogen discharge quantity is 4.0 × 10¹⁸ molecules/cm³ and the water vapor discharge quantity was 2.2 × 10¹⁷ molecules/cm³.

A core rod with cladding was prepared by a VAD method, and stretched under heating in a vertical electric furnace to 20 mm outer diameter and 1000 mm length. The core glass rod was carefully inserted into the quartz glass tube so that it was not in contact with the inner peripheral surface of the tube. The core glass rod and the quartz glass tube were secured with their circle centers being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube to produce a preform for optical fibers. The preform obtained was cut at every 1000 mm and, when white light was applied to the quartz glass preform from the end in a dark room, the number of bubbles with a minimum size of 0.1 mm or more that could be visually recognized was 28 per 1000 mm.

### Comparative Example 3

Using naturally occurring crystals, a transparent glass ingot of an outer diameter of about 120 mm and a length of about 1300 mm was produced in oxyhydrogen flame comprising gaseous hydrogen at 30 m³/h and hydrogen gas at 15 m³/h. The ingot was ground at both ends and the outer periphery was cut to 90 mm by a cylindrical grinding device, the circle center for the outer diameter was determined, an aperture was formed by a core drilling device being aligned with the circle center and was polished to a size of 25 mm by a precision honing device. The quartz glass tube had an outer diameter of 90 mm and an inner diameter of 25 mm and it was cut into 1000 mm length.

When OH groups, chlorine and gas discharge quantity in vacuum at 1000°C were measured for the samples of the quartz glass tube, the residual OH group concentration was 180 ppm, the chlorine concentration was not detected, the gaseous hydrogen discharge quantity is 1.3 × 10⁹ molecules/cm³ and the water vapor discharge quantity was 6.0 × 10¹⁷ molecules/cm³.

A core rod with cladding was prepared by a VAD method, and stretched under heating by a precision autostretcher having outer diameter control to an outer diameter of 20 mm and a length 1300 mm. The core glass rod was carefully inserted into the quartz glass tube so that it was not in contact with the inner peripheral surface of the tube. The core glass rod and the quartz glass tube were secured with their circle centers being aligned to each other, both ends were connected to quartz glass dummy tubes, inserted from the lower end portion into a vertical electric furnace at 2000°C from above at 90 mm/min, the lower end portion was welded and then heated zonewise successively to be welded integrally while reducing the pressure in the quartz glass tube to produce a preform for optical fibers. When white light was applied to the quartz glass preform, from the end face in a dark room, the number of bubbles with a minimum size of 0.1 mm or more that could be visually recognized was 48 per 1000 mm.

Because the quartz glass preform for optical fibers obtained by the production method according to the present invention utilizes a quartz glass tube having high dimensional accuracy, the clearance between the core glass rod and the quartz glass tube in the preform can be minimized in producing a quartz glass preform for optical fibers in accordance with a rod-in-tube method, resulting in high accuracy and quality of the preform, which is free from the presence of bubbles at the welded interface between the quartz glass tube and the core glass rod used for the preform. By using the quartz glass preform for optical fibers, high quality optical fibers can be obtained at a high mass productivity and at a reduced cost.

## Claims

1. A method for producing a quartz glass preform for optical fibers comprising mechanically grinding the inner and outer peripheral surface of a high purity quartz glass ingot using diamond abrasive particles, mechanically polishing the inner peripheral surface of the ingot with cerium oxide abrasive particles, in order to obtain a quartz glass tube with a annular cross section defined by a mean outer diameter around a first circular center, and a mean inner diameter around a second circular center, whereby the quartz glass tube has in its longitudinal direction a mean difference in outer diameter of up to 1.0 mm, a mean difference in inner diameter of up to 0.5 mm, an outer diameter circularity of up to 0.5 mm, an inner diameter circularity of up to 0.5 mm, and a deviation of the first circle center for the mean outer diameter of up to 1 mm, with a deviation of the second circle center with respect to the first circle center of up to 1 mm or less, having an OH group concentration of up to 1 ppm, a chlorine content of up to 3000 ppm, a gaseous hydrogen discharge quantity of up to 1.0 × 10¹⁸ molecule/cm³, and a water vapor discharge quantity of up to 2.0 × 10¹⁷ molecule/cm³, inserting a core glass rod into said quartz glass tube and then heating and melt welding them together in order to obtain a monolithic body to be used as the quartz glass preform.

2. A method for producing a quartz glass preform for optical fibers as claimed in Claim 1, wherein the quartz glass tube is a high purity synthetic quartz glass tube or a high purity glass tube, made of naturally occurring quartz.

3. A method for producing a quartz glass preform for optical fibers as claimed in Claim 1 or 2, wherein the quartz glass tube comprises an inner peripheral surface having a maximum roughness Rmax of up to 1 µm and a center line average roughness Ra of up to 0.1 µm, and an outer peripheral surface having a maximum roughness Rmax of up to 10 µm and a center line average roughness Ra of up to 1 µm.

4. A method for producing a quartz glass preform for optical fibers as claimed in Claim 2, wherein the quartz glass tube comprises an inner peripheral surface having a maximum roughness Rₘₐₓ of up to 1 µm and a center line average roughness Rₐ of up to 0.1µm, and an outer peripheral surface having a maximum roughness Rmax of up to 10µm and a center line average roughness Rₐ of up to 1 µm.

5. A method for producing a quartz glass preform for optical fibers as claimed in Claim 1, wherein the inner and the outer peripheral surfaces of the quartz glass tube are further heated and melted into a fire polished surface.

6. A method for producing a quartz glass preform for optical fibers as claimed in Claim 5, wherein the quartz glass tube comprises an inner and outer peripheral surface having a maximum roughness Rmax of up to 0.5 µm, an inner peripheral surface having a center line average Ra of up to 0.05 µm, and an outer peripheral surface having a center line average roughness Rₐ of up to 0.1 µm.

7. A method for producing a quartz glass preform for optical fibers as in Claim 1, **characterized by** a heat treating of the quartz glass tube in air or in an inert gas in the temperature range of from 800°C to 2500°C to control the gaseous hydrogen discharge quantity to a value up to 5.0 × 10¹⁷ molecule/cm³, and the water vapor discharge quantity to a value up to 1.0 × 10¹⁷ molecule/cm³.

8. A method for producing a quartz glass preform for optical fibers, as claimed in claim 1, which comprises further heat treating the quartz glass tube in vacuum in the temperature range of from 800°C to 2500°C to control the gaseous hydrogen discharge quantity to a value up to 2.0 × 10¹⁶ molecule/cm³, and the water vapor discharge quantity to a value up to 5.0 × 10¹⁶ molecule/cm³.

9. A quartz glass tube for use in the method for producing a quartz glass preform for optical fibers, as claimed in claim 1, having a annular cross section defined by a mean outer diameter around a first circular center, and a mean inner diameter around a second circular center, whereby the quartz glass tube has in its longitudinal direction a mean difference in outer diameter of up to 1.0 mm, a mean difference in inner diameter of up to 0.5 mm, an outer diameter circularity up to 0.5 mm, an inner diameter circularity of up to 0.5 mm, and a deviation of the first circle center for the mean outer diameter of up to 1 mm, with a deviation of the second circle center with respect to the first circle center of up to 1 mm or less, having an OH group concentration of up to 1 ppm, a chlorine content of up to 3000 ppm, a gaseous hydrogen discharge quantity of up to 1.0 × 10¹⁸ molecule/cm³, and a water vapor discharge quantity of up to 2.0 × 10¹⁷ molecule/cm³.

## Patentansprüche

1. Verfahren zur Herstellung einer Quarzglas-Vorform für optische Fasern, umfassend ein mechanisches Schleifen der inneren und äußeren peripheren Fläche eines hochreinen Quarzglasblocks unter Verwendung von Diamant-Abrasivpartikeln, ein mechanisches Polieren der inneren peripheren Oberfläche des Blocks mit Ceriumoxid-Abrasivpartikeln unter Bildung eines Quarzglasrohres mit einem ringförmigen Querschnitt, welcher durch einen mittleren Außendurchmesser um ein erstes zirkulares Zentrum, und einen mittleren Innendurchmesser um ein zweites zirkulares Zentrum definiert ist, wobei das Quarzglasrohr in Richtung der Längsachse gesehen einen mittleren Unterschied im Außendurchmesser von maximal 1 mm, einen mittleren Unterschied im Innendurchmesser von maximal 0,5 mm, eine Zirkularität des Außendurchmessers von maximal 0,5 mm, eine Zirkularität des Innendurchmessers von maximal 0,5 mm, und eine Abweichung des ersten zirkularen Zentrums für den mittleren Außendurchmesser von maximal 1 mm, mit einer Abweichung des zweiten zirkularen Zentrums vom ersten zirkularen Zentrum von maximal 1 mm oder weniger aufweist, und wobei das Quarzglasrohr eine OH-Gruppenkonzentration von bis zu 1 ppm, einen Chlorgehalt von bis zu 3000 ppm, eine Ausgasungsmenge an gasförmigem Wasserstoff bis zu 1.0 x 10¹⁸ Molekülen/cm³, und eine Ausgasungsmenge an Wasserdampf von bis zu 2,0 x 10¹⁷ Molekülen/cm³ aufweist, Einsetzen eines Kernglasstabes in besagtes Quarzglasrohr und dann Erhitzen und Zusammenschmelzen unter Bildung eines monolithischen Körpers, der als Quarzglas-Vorform eingesetzt wird.

2. Verfahren zur Herstellung einer Quarzglas-Vorform für optische Fasern nach Anspruch 1, **dadurch gekennzeichnet, dass** das Quarzglasrohr ein Quarzglasrohr aus hochreinem synthetischem Quarzglas oder ein aus natürlich vorkommendem Quarz hergestelltes Glasrohr ist.

3. Verfahren zur Herstellung einer Quarzglas-Vorform für optische Fasern nach Anspruch 1 oder 2, **dadurch gekennzeichnet, dass** das Quarzglasrohr eine innere periphere Oberfläche aufweist, welche eine maximale Rauigkeit Rₘₐₓ von bis zu 1 µm und einen Mittenrauwert Rₐ bis zu 0,1 µm aufweist, und eine äußere periphere Oberfläche, welche eine maximale Rauigkeit Rₘₐₓ von bis zu 10 µm und einen Mittenrauwert Rₐ von bis zu 1 µm aufweist.

4. Verfahren zur Herstellung einer Quarzglas-Vorform für optische Fasern nach Anspruch 2, **dadurch gekennzeichnet, dass** das Quarzglasrohr eine innere periphere Oberfläche aufweist, welche eine maximale Rauigkeit Rₘₐₓ von bis zu 1 µm und einen Mittenrauwert Rₐ von bis zu 0,1 µm aufweist, und eine äußere periphere Oberfläche, welche eine maximale Rauigkeit Rₘₐₓ von bis zu 10 µm und einen Mittenrauwert Rₐ von bis zu 1 µm aufweist.

5. Verfahren zur Herstellung einer Quarzglas-Vorform für optische Fasern nach Anspruch 1, **dadurch gekennzeichnet, dass** die innere und die äußere peripheren Oberflächen des Quarzglasrohres zusätzlich erhitzt und zu einer feuerpolierten Oberfläche verschmolzen werden.

6. Verfahren zur Herstellung einer Quarzglas-Vorform für optische Fasern nach Anspruch 5, **dadurch gekennzeichnet, dass** das Quarzglasrohr eine innere und äußere periphere Oberfläche aufweist, welche eine maximale Rauigkeit Rₘₐₓ von bis zu 0,5 µm, eine innere periphere Oberfläche mit einem Mittenrauwert Rₐ von bis zu 0,05 µm, und eine äußere periphere Oberfläche mit einem Mittenrauwert Rₐ von bis zu 0,1 µm aufweist.

7. Verfahren zur Herstellung einer Quarzglas-Vorform für optische Fasern nach Anspruch 1, **dadurch gekennzeichnet, dass** die Heizbehandlung des Quarzglasrohres in Luft oder in einem Inertgas in einem Temperaturbereich zwischen 800°C und 2500°C erfolgt, wobei das Ausgasen von gasförmigem Wasserstoff auf eine Menge von bis zu 5,0 x 10¹⁷ Molekülen/cm³, und das Ausgasen von Wasserdampf auf einen Wert von bis zu 1,0 x 10¹⁷ Molekülen /cm³ eingestellt wird.

8. Verfahren zur Herstellung einer Quarzglas-Vorform für optische Fasern nach Anspruch 1, umfassend weiterhin eine Heizbehandlung des Quarzglasrohres unter Vakuum bei einer Temperatur im Bereich von 800°C bis 2500°C, um das Ausgasen des gasförmigen Wasserstoffes auf eine Menge im Bereich bis zu einem Wert von 2,0 x 10¹⁶ Molekülen/cm³ und das Ausgasen von Wasserdampf auf eine Menge bis zu einem Wert von 5,0 x 10¹⁶ Molekülen/cm³ einzustellen.

9. Quarzglasrohr zum Einsatz in einem Verfahren zur Herstellung einer Quarzglas-Vorform für optische Fasern nach Anspruch 1, aufweisend einen kreisförmigen Querschnitt der durch einen mittleren Außendurchmesser um ein erstes zirkulares Zentrum, und einen mittleren Innendurchmesser um ein zweites zirkulares Zentrum definiert ist, wobei das Quarzglasrohr in Richtung seiner Längsachse gesehen einen mittleren Unterschied im Außendurchmesser bis zu 1,0 mm, einen mittleren Unterschied im Innendurchmesser bis zu 0,5 mm eine Zirkularität im Außendurchmessers bis zu 0,5 mm, eine Zirkularität im Innendurchmesser bis zu 0,5 mm, und eine Abweichung des ersten zirkularen Zentrums für den mittleren Außendurchmesser von bis zu 1 mm, mit einer Abweichung des zweiten zirkularen Zentrums vom ersten zirkularen Zentrum bis zu 1 mm oder weniger aufweist, und das eine OH-Gruppen-Konzentration von bis zu 1 ppm, einen Chlorgehalt von bis zu 3000 ppm, eine Ausgasung an gasförmigem Wasserstoff bis zu 1,0 x 10¹⁸ Molekülen/cm³, und eine Ausgasung an Wasserdampf von bis zu 2,0 x 10¹⁷ Molekülen/cm³ aufweist.

## Revendications

1. Procédé pour la production d'une préforme de verre de quartz pour fibres optiques comprenant le meulage mécanique des surfaces périphériques internes et externes d'un lingot de verre de quartz de haute pureté, utilisant des particules de diamant abrasives, le polissage mécanique de la surface périphérique interne du lingot avec des particules abrasives d'oxyde de cérium afin d'obtenir un tube de verre de quartz avec une section transversale annulaire définie par un diamètre externe moyen autour d'un premier centre circulaire et un diamètre interne moyen autour d'un second centre circulaire, le tube de verre de quartz ayant dans sa direction longitudinale une différence moyenne en diamètre extérieur au maximum de 1,0 mm, une différence moyenne en diamètre interne au maximum de 0,5 mm, une circularité de diamètre externe au maximum de 0,5 mm, une circularité de diamètre interne au maximum de 0,5 mm et une déviation du premier centre de cercle pour le diamètre externe moyen au maximum de 0,1 mm avec une déviation du second centre de cercle par rapport au premier centre de cercle inférieur ou égal à 1 mm, ayant une concentration de groupe OH maximum de 1 ppm, une teneur en chlore maximale de 3000 ppm, une quantité de décharge d'hydrogène gazeux de maximum 1,0 x 10¹⁸ molécules/cm³ et une quantité de décharge de vapeur d'eau maximale de 2,0 x 10¹⁷ molécules/cm³, par insertion de la barre de verre de coeur dans ledit tube de verre de quartz et ensuite chauffage et soudage par fusion ensemble afin d'obtenir un corps monolithique à utiliser comme préforme de verre de quartz.

2. Procédé pour la production d'une préforme de verre de quartz pour des fibres optiques, tel que revendiqué dans la revendication 1, dans lequel le tube de verre de quartz est un tube de verre de quartz synthétique de haute pureté ou un tube de verre de haute pureté fait de quartz d'origine naturelle.

3. Procédé pour la production d'une préforme de verre de quartz pour fibres optiques tel que revendiqué dans la revendication 1 ou 2, dans lequel le tube de verre de quartz comprend une surface périphérique interne ayant une rugosité maximale Rₘₐₓ de maximum 1 µm et une rugosité moyenne de ligne de centre Rₐ de maximum 0,1 µm et une rugosité moyenne de ligne de centre Rₐ de maximum 1 µm.

4. Procédé pour la production d'une préforme de verre de quartz pour fibres optiques tel que revendiqué dans la revendication 2, dans lequel le tube de verre de quartz comprend une surface périphérique interne ayant une rugosité maximale Rₘₐₓ de maximum 1 µm et une rugosité moyenne de ligne de centre Rₐ de maximum 0,1 µm et une rugosité moyenne de ligne de centre Rₐ de maximum 1 µm.

5. Procédé pour la production d'une préforme de verre de quartz pour fibres optiques tel que revendiqué dans la revendication 1, dans lequel les surfaces périphériques internes et externes du tube de verre de quartz sont chauffées et fondues en une surface polie au feu.

6. Procédé pour la production d'une préforme de verre de quartz pour fibres optiques tel que revendiqué dans la revendication 1, dans lequel le tube de verre de quartz comprend une surface périphérique interne ayant une rugosité maximale Rₘₐₓ de maximum 0,5 µm et une rugosité moyenne de ligne de centre Rₐ de maximum 0,05 µm et une rugosité moyenne de ligne de centre Rₐ de maximum 1 µm.

7. Procédé pour la production d'une préforme de verre de quartz pour fibres optiques tel que revendiqué dans la revendication 1, **caractérisé par** un traitement de chaleur du tube de verre de quartz dans une plage de température comprise entre 800°C et 2500°C pour contrôler la quantité de décharge d'hydrogène gazeux à une valeur maximale de 5,0 x 10¹⁷ molécules/cm³ et la quantité de décharge de vapeur d'eau à une valeur maximale de 1,0 x 10¹⁷ molécules/cm³.

8. Procédé pour la production d'une préforme de verre de quartz pour fibres optiques tel que revendiqué dans la revendication 1, **caractérisé par** un traitement de chaleur du tube de verre de quartz dans une plage de température comprise entre 800°C et 2500°C pour contrôler la quantité de décharge d'hydrogène gazeux à une valeur maximale de 2,0 x 10¹⁶ molécules/cm³ et la quantité de décharge de vapeur d'eau à une valeur maximale de 5,0 x 10¹⁶ molécules/cm³.

9. Tube de verre de quartz pour l'utilisation dans le procédé pour la production d'une préforme de verre de quartz pour fibres optiques tel que revendiqué dans la revendication 1, avec une section transversale annulaire définie par un diamètre externe moyen autour d'un premier centre circulaire et un diamètre interne moyen autour d'un second centre circulaire, le tube de verre de quartz ayant dans sa direction longitudinale, une différence moyenne en diamètre extérieur au maximum de 1,0 mm, une différence moyenne en diamètre interne au maximum de 0,5 mm, une circularité de diamètre externe au maximum de 0,5 mm, une circularité de diamètre interne au maximum de 0,5 mm et une déviation du premier centre de cercle pour le diamètre externe moyen au maximum de 1 mm avec une déviation du second centre de cercle par rapport au premier centre de cercle inférieur ou égale à 1 mm, ayant une concentration de groupe OH maximum de 1 ppm, une teneur en chlore maximale de 3000 ppm, une quantité de décharge d'hydrogène gazeux de maximum 1,0 x 10¹⁸ molécules/cm³ et une quantité de décharge de vapeur d'eau maximale de 2,0 x 10¹⁷ molécules/cm³.
